# EUROPEAN PATENT SPECIFICATION

(11) **EP 1 555 889 B1**
(45) Date of publication and mention of the grant of the patent: **14.03.2012**
(21) Application number: 03769658.0
(22) Date of filing: 28.10.2003
(51) Int. Cl.: A23G 3/00, A23G 1/00, A23G 3/54

(54) **METHOD OF PREPARING MOULDED CONFECTIONERY ARTICLES**
VERFAHREN ZUR HERSTELLUNG VON GEFORMTEN KONFEKTWAREN
PROCEDE POUR PREPARER DES ARTICLES DE CONFISERIE MOULES

(30) Priority: 29.10.2002 GB 0225087
(43) Date of publication of application: 27.07.2005
(73) Proprietor: Cadbury Holdings Limited, Uxbridge, Middlesex UB8 1DH (GB)
(72) Inventor: SANDERS, Nigel, Hugh, Toronto, Ontario M6S 2Y5 (CA); SMITH, Ian Humphrey, Reading, Berkshire RG8 7BD (GB); BROWN, Anthony James, Reading, Berkshire RG1 6SS (GB); MINVILLE, Benoit, Shefford, Quebec J2G 9J (CA)
(74) Representative: Ward, David Ian
(86) International application number: PCT/GB2003/004624
(87) International publication number: WO 2004/039167

(56) References cited:
- WO-A-96/39045
- DE-A- 19 503 635
- GB-A- 1 386 469
- US-A- 1 711 750
- US-A- 4 229 484
- US-A- 4 517 205
- US-A- 5 264 234
- US-B1- 6 238 724

## Description

This invention relates to a method of preparing moulded confectionery articles and is more concerned with a method of preparing moulded confectionery articles comprising both a candy composition and a chocolate composition.

It is known to prepare moulded confectionery articles comprising a candy outer layer with an inner core formed of chocolate. A method for producing a two-component hard candy with a chocolate core is known from US 4517205. A process for the production of filled confectionery, such as toffee filled with chocolate, is described in US 4229484. However, problems arise when moulding such confectionery articles because the candy composition needs to be deposited in the moulds at a relatively high temperature to enable the candy to flow properly. On the other hand, chocolate suffers from the disadvantage that, when it is heated above a critical temperature, it exhibits a sharp increase in viscosity making it virtually impossible to mould successfully. This critical temperature is generally in the range of about 50°C to 120°C but depends upon the nature of the chocolate formulation. The critical temperature is higher for dark chocolate (i.e. chocolate containing no milk solids) than for milk and white chocolate, both of which contain milk solids. This sharp increase in viscosity also occurs with chocolate compound coatings.

Furthermore, chocolate also tends to degrade when exposed for extended periods of time to temperatures rather lower than the critical temperatures. Thus, it is common to set practical upper temperature limits when handling chocolate. The limits are typically set at 85°C for dark chocolate, and 75°C for milk and white chocolates. Above these temperatures, the viscosity of the chocolate increases, and extended holding times causes flavour degradation, and eventually the product solidifies into an unworkable mass.

It is an object of the present invention to provide an improved method of preparing moulded confectionery articles which enables the above-mentioned problems to be mitigated.

According to the present invention, there is provided a method of preparing moulded confectionery articles, comprising the steps of:
(1) preparing a liquid candy composition which solidifies upon cooling, said liquid candy composition being at a first temperature;
(2) preparing a liquid chocolate composition which solidifies upon cooling, said liquid chocolate composition being at a second temperature which is lower than said first temperature;
(3) co-depositing the liquid candy composition and the liquid chocolate composition in moulds; and
(4) cooling the moulded compositions in the moulds so as to solidify the moulded compositions to form moulded confectionery articles;
wherein the first temperature is greater than the practical upper temperature limit for handling chocolate, the limit being 85°C when the liquid chocolate composition is a dark chocolate and 75°C when the liquid chocolate composition is a milk or white chocolate; and wherein the liquid chocolate composition is subjected to a high shear of at least 100s⁻¹, before being co-deposited in the moulds, the chocolate composition being subjected to the high shear in the depositor immediately prior to being introduced into the moulds during step (3).

By subjecting the liquid chocolate composition to a high shear before it is co-deposited into the moulds, it is found that the liquid chocolate composition can remain mouldable at temperatures above the temperature at which it normally exhibits a sharp increase in viscosity. Thus, this procedure enables the candy composition to be deposited into the moulds at a temperature which is higher than has heretofore been considered possible.

Co-depositing the candy composition and the chocolate composition in the mould ensures that the chocolate composition is exposed to the higher first temperature for only a relatively short period of time, thus reducing the risk of flavour degradation and product solidification.

For example, it is found that, even when the chocolate composition is a milk chocolate composition, it can be successfully co-deposited with a liquid candy composition at temperatures as high as 150°C using a one-shot co-depositor, if the chocolate composition is subjected to a high shear of at least 100 s⁻¹, and preferably at about 500 s⁻¹, and preferably up to 5000 s⁻¹.

The candy composition may be any sugar-based candy composition such as a hard candy composition or a caramel composition. These are generally compositions which are produced by boiling a sugar syrup to a temperature of about 150°C and introducing flavourings into the cooked sugar. These high boiling compositions must be deposited at at least about 135°C to avoid so-called "tailing" during depositing. In contrast, the chocolate composition is maintained at a much lower temperature (typically about 40°C) up until the time when it is co-deposited with the candy composition. At which time, it becomes heated to about 135°C as a result of heat transfer from the candy composition.

In the case where the chocolate composition to be deposited has a relatively low critical temperature, in addition to subjecting it to a high shear, it is also within the scope of the invention to include a minor amount of dark chocolate (e.g. up to about 10%) so as to increase its critical temperature. However, this procedure does suffer from the disadvantage that the taste of the chocolate is changed and may also increase the cost of production.

It is further possible to improve the viscosity characteristics of the chocolate being moulded by increasing the fat content by, for example, addition of cocoa butter in an amount of at least 1% by weight and preferably at least 2% by weight.

Preferably, the chocolate is subjected to a high shear in the range of 100 to 1000 s⁻¹, more preferably 200 to 500 s⁻¹ before being deposited into the moulds.

The chocolate composition may be subjected to high shear either in the depositor itself immediately prior to being introduced into the moulds, or it may be subjected to high shear prior to being passed to the depositor. However, it is important to effect such shearing at a stage when the chocolate will not lose its advantageous viscosity characteristics before being deposited into the moulds.

In one series of embodiments, the chocolate composition is subjected to high shear prior to being passed into the depositor and in the depositor itself, the first shearing process being referred to hereinafter as "pre-shear". Preferably, said pre-shear is from about 100s⁻¹ to 5000s⁻¹. More preferably, the chocolate composition is subjected to a pre-shear which is greater than the subsequent shear in the depositor.

An example of the present invention will now be described in more detail.

### Recipe

| | **Ingredient** | **% by weight** |
|---|---|---|
| 1) | Premix of | |
| | Liquid sugar | 54.3 |
| | Glucose Syrup | 35.5 |
| 2) | Flavour | 0.2 |
| 3) | Milk Chocolate coating (see Example below) | 10.0 |

### Process

1. The pre-mix was batch weighed into a heated tank.
2. The pre-mix was transferred via a small buffer tank to a pre-cooker and heated to 126 °C.
3. The pre-mix was then transferred to a Microfilm vacuum cooker where it was cooked at 150°C in a vacuum of 3 inHg (10.2 kPa).
4. The flavour was mixed into the cooked candy mass which was then transferred to the depositor hopper (temperature 140°C).
5. Molten chocolate coating at 40 °C was pumped to the depositor hopper (temperature 50°C).
6. The cooked candy mass and the chocolate were co-deposited through a manifold plate at 135 °C into moulds, at a speed of 70 strokes per minute (Baker Perkins (APV) model 156 depositer 156/049).
7. The moulds were immediately transferred into a cooling tunnel set to 25°C and 35% RH (relative humidity) to harden and cool down the candy
8. The candies were then de-moulded and fed automatically via conveyors to wrapping machines.

The average shear rate experienced by the chocolate in the narrowest section of the depositor (i.e. the depositor nozzle) was calculated to be 245s⁻¹ (i.e. half the shear rate experienced at the wall of the depositor nozzle, assuming Newtonian flow behaviour).

| **Example Milk chocolate coating composition** | **% by weight** |
|---|---|
| Milk chocolate crumb | 69.8 |
| Cocoa butter equivalent | 21.9 |
| Butter oil | 0.3 |
| Soya lecithin | 0.3 |
| Sugar | 4.2 |
| Cocoa liquor | 3.4 |
| Flavour | 0.1 |

In a modification of the above Example, the molten chocolate composition is subjected to a pre-shear in an in-line shear mixer prior to being pumped into the depositor.

## Claims

1. A method of preparing moulded confectionery articles, comprising the steps of:
(1) preparing a liquid candy composition which solidifies upon cooling, said liquid candy composition being at a first temperature;
(2) preparing a liquid chocolate composition which solidifies upon cooling, said liquid chocolate composition being at a second temperature which is lower than said first temperature;
(3) co-depositing the liquid candy composition and the liquid chocolate composition in moulds; and
(4) cooling the moulded compositions in the moulds so as to solidify the moulded compositions to form moulded confectionery articles;
wherein the first temperature is greater than the practical upper temperature limit for handling chocolate, the limit being 85°C when the liquid chocolate composition is a dark chocolate and 75°C when the liquid chocolate composition is a milk or white chocolate; and
wherein the liquid chocolate composition is subjected to a high shear of at least 100s⁻¹, before being co-deposited in the moulds, the chocolate composition being subjected to the high shear in the depositor immediately prior to being introduced into the moulds during step (3).

2. The method of claim 1, wherein the liquid chocolate composition is subjected to a shear of from 100 to 1000s⁻¹,

3. The method of claim 1, wherein the liquid chocolate composition is subjected to a shear of from 200 to 500s⁻¹.

4. The method of any preceding claim wherein the candy composition is a hard candy or caramel composition and the first temperature is from 135°C up to 150°C.

5. The method of any preceding claim wherein the second temperature is about 40°C.

6. The method of any preceding claim wherein the chocolate composition is a milk chocolate composition.

7. The method of claim 6, wherein up to 10% dark chocolate is added to the milk chocolate composition prior to step (3).

8. The method of any preceding claim wherein additional fat is added to the chocolate composition so as to increase its fat content by at least 1 % by weight, prior to step (3).

9. The method of any one of the preceding claims wherein the chocolate composition is subjected to a pre-shear prior to step (3).

10. The method of claim 9, wherein the pre-shear is in the range of from 100s⁻¹ to 5000 s⁻¹.

11. The method of claim 9 or 10, wherein the pre-shear is greater than the high shear.

## Patentansprüche

1. Verfahren zur erstellung von geformten Konfektwaren, umfassend die Schritte des:
(1) Herstellens einer flüssigen Bonbonzusammensetzung, die sich auf das Kühlen hin verfestigt, wobei die flüssige onbonzusammensetzung sich bei einer ersten Temperatur befindet,
(2) Herstellens einer flüssigen Schokoladezusammensetzung, die sich auf das Kühlen hin verfestigt, wobei die flüssige Schokoladezusammensetzung sich bei einer zweiten Temperatur befindet, die niedriger ist als die erste Temperatur;
(3) gleichzeitigen Absetzens der flüssigen Bonbonzusammensetzung und der flüssigen Schokoladezusammensetzung in Formen; und
(4) Kühlens der geformten Zusammensetzungen in den Formen, um die geformten Zusammensetzungen zu verfestigen, um geformten Konfektwaren zu bilden;
wobei die erste Temperatur höher ist als die praktische obere Temperaturgrenze for das Handhaben von Schokolade, wobei die Grenze 85 °C ist, wenn die flüssigen Schokoladezusammensetzung eine Bitterschokolade ist und 75 °C, wenn die flüssige Schokoladezusammensetzung eine Milch- oder weiße Schokolade ist; und
wobei die flüssige Schokotadezusammensetzung einer hohen Scherbeanspruchung von mindestens 100 s⁻¹ unterworfen wird, bevor sie gleichzeitig in den Formen abgesetzt wird, wobei die Schokoladezusammensetzung der hohen Scherbeanspruchung im Depositor direkt vor dem Einrühren in die Formen während Schritt (3) unterworfen wird.

2. Verfahren nach Anspruch 1, wobei die flüssige Schokolade sammensetzung einer Scherbeanspruchung von 100 bis 1000 s⁻¹ unterworfen wird.

3. Verfahren nach Anspruch 1, wobei die flüssige Schokoladezusammensetzung einer Scherbeanspruchung von 200 bis 500 s⁻¹ unterworfen wird.

4. Verfahren nach einem der vorhergehenden Ansprüche, wobei die Bonbonzusammensetzung eine Hartbonbon- oder -karamelzusammensetzung ist und die erste Temperatur 135 °C bis 150 °C beträgt.

5. Verfahren nach einem der vorhergehenden Ansprüche, wobei die zweite Temperatur etwa 40 °C beträgt.

6. Verfahren nach einem der vorhergehenden Ansprüche, wobei die Schokoladezusammensetzung eine Milchschokoladezusammensetzung ist.

7. Verfahren nach Anspruch 6, wobei bis zu 10 % Bitterschokolade der Milchschokoladezusammensetzung vor Schritt (3) hinzugegeben wird.

8. Verfahren nach einem der vorhergehenden Ansprüche, wobei zusätzliches Fett der Schokoladezusammensetzung hinzugegeben wird, um ihren Fettgehalt um mindestens 1 Gew.-% vor Schritt (3) zu erhöhen.

9. Verfahren nach einem der vorhergehenden Ansprüche, wobei die Schokoladezusammensetzung vor Schritt (3) einer Vorscherbeanspruchung unterworfen wird.

10. Verfahren nach Anspruch 9, wobei die Vorscherbeanspruchung im Bereich von 100 s⁻¹ bis 5000 s⁻¹ liegt.

11. Verfahren nach Anspruch 9 oder 10, wobei die Vorscherbeanspruchung höher als die hohe Scherbeanspruchung ist.

## Revendications

1. Procédé de préparation d'articles de confiserie moulés, comprenant les étapes de :
(1) préparation d'une composition liquide pour bonbons, qui se solidifie à l'issue du refroidissement, ladite composition liquide pour bonbons étant à une première température ;
(2) préparation d'une composition chocolatée liquide qui se solidifie à l'issue du refroidissement, ladite composition liquide chocolatée étant à une seconde température qui est inférieure à ladite première température ;
(3) co-dépôt de la composition liquide pour bonbons et de la composition chocolatée liquide dans des moules ; et
(4) refroidissement des compositions moulées dans les moules afin de solidifier les compositions moulées pour former des articles de confiserie moulés ;
dans lequel la première température est supérieure à la limite de température supérieure pratique pour manipuler le chocolat, la limite étant de 85°C lorsque la composition chocolatée liquide est un chocolat noir et de 75°C lorsque la composition chocolatée liquide est un chocolat au lait ou du chocolat blanc ; et
dans lequel la composition chocolatée liquide est soumise à un cisaillement élevé d'au moins 100 s⁻¹, avant d'être co-déposée dans les moules, la composition chocolatée étant soumise au cisaillement élevé dans le dispositif de dépôt immédiatement avant d'être introduite dans les moules durant l'étape (3).

2. Procédé selon la revendication 1, dans lequel la composition chocolatée liquide est soumise à un cisaillement de 100 à 1000 s⁻¹.

3. Procédé selon la revendication 1, la composition chocolatée liquide étant soumise à un cisaillement de 200 à 500 s⁻¹.

4. Procédé selon l'une quelconque des revendications précédentes, dans lequel la composition pour bonbons est une composition pour bonbons ou pour caramels durs et la première température est de 135°C jusqu'à 150°C:

5. Procédé selon l'une quelconque des revendications précédentes, dans lequel la seconde température est d'environ 40°C.

6. Procédé selon l'une quelconque des revendications précédentes, dans lequel la composition chocolatée est une composition de chocolat au lait.

7. Procédé selon la revendication 6, dans lequel jusqu'à 10 % de chocolat noir est ajouté à la composition de chocolat au lait avant l'étape (3).

8. Procédé selon l'une quelconque des revendications précédentes, dans lequel une graisse supplémentaire est ajoutée à la composition chocolatée afin d'accroître sa teneur en graisse d'au moins 1 % en poids, avant l'étape (3).

9. Procédé selon l'une quelconque des revendications précédentes, dans lequel la composition chocolatée est soumise à un pré-cisaillement avant l'étape (3).

10. Procédé selon la revendication 9, dans lequel le pré-cisaillement se situe dans la plage de 100 s⁻¹ à 5000 s⁻¹.

11. Procédé selon la revendication 9 ou 10, dans lequel le pré-cisaillement est supérieur au cisaillement élevé.
